# EUROPEAN PATENT SPECIFICATION

(11) **EP 0 867 125 B1**
(45) Date of publication and mention of the grant of the patent: **06.03.2002**
(21) Application number: 97926226.8
(22) Date of filing: 11.06.1997
(51) Int. Cl.: A23L 3/3562, A23L 3/349, A23L 3/3508, A23L 3/3517, A23L 3/3526, A23L 3/358, A23L 3/3472, A23L 3/3553, A01N 31/06, A01N 65/00, A01N 37/00

(54) **PRESERVATIVES AND METHOD FOR PRESERVATION AGAINST DECAY**
KONSERVIERUNGSMITTEL UND VERFAHREN ZUM SCHUTZ GEGEN VERFALL
CONSERVATEURS ET PROCEDE DE PROTECTION CONTRE LE POURRISSEMENT

(30) Priority: 17.06.1996 JP 15523196
(43) Date of publication of application: 30.09.1998
(73) Proprietor: Fuji Oil Co., Ltd., Osaka-shi, Osaka 542-0086 (JP)
(72) Inventor: NAKAMURA, Akihiro, Fuji Oil Co., Ltd. Tsukuba, Yawara-mura, Tsukuba-gun, Ibaraki 300-24 (JP); HATTORI, Mitsuo, Fuji Oil Co., Ltd. Tsukuba, Yawara-mura, Tsukuba-gun, Ibaraki 300-24 (JP); MAEDA, Hirokazu, Fuji Oil Co., Ltd. Tsukuba, Yawara-mura, Tsukuba-gun, Ibaraki 300-24 (JP)
(74) Representative: Hale, Stephen Geoffrey
(86) International application number: JP9702018
(87) International publication number: WO9748291

(56) References cited:
- EP-A- 0 521 707
- JP-A- 5 017 503
- JP-A- 8 168 364
- DATABASE WPI Section Ch, Week 9252 Derwent Publications Ltd., London, GB; Class D13, AN 92-428800 XP002087577 & JP 04 325058 A (FUJI OIL CO LTD) , 13 November 1992
- PATENT ABSTRACTS OF JAPAN vol. 007, no. 248 (C-193), 4 November 1983 & JP 58 134968 A (TOKUYA NAKAMURA;OTHERS: 01), 11 August 1983

## Description

### Technical Field

The present invention relates to a preserving agent and to a preserving method.

### Background Art

Organic acids, inorganic acids, ethanol and glycine are commonly used to prevent degeneration and improve the shelf-life of food products (Japanese Unexamined Patent Publication No. 56-109580, 57-43668, 58-138367).

Various foods have been screened for food-preserving substances in recent years, resulting in the discovery of such preservatives as polylysine, protamine, lysozyme, etc., in addition to synthetic chemical products; however, since these preservatives exhibit exceedingly strong antibacterial activity only against certain specific bacteria, they are not adequate as general food preservatives. In order to achieve satisfactory preservation it is necessary to add large amounts of these substances to foods, which is undesirable because of their high price which increases overall costs.

In addition to these substances, spices which have long been used in foods have also been reported to contain substances exhibiting antibacterial activity, but they also fail to fully satisfy the conditions required for food preservatives.

As mentioned above, preserving agents used in foods and drinks will preferably exhibit a continuous antibacterial effect for preservation over long periods with minimal amounts of addition, and when used in foods they must not impair their taste or texture.

Because widely used food preserving agents such as ethanol, glycine, organic acids and inorganic acids themselves have characteristic flavors and aromas, they cannot be added to foods and drinks in amounts required to provide adequate preservation effects. Also, natural substances such as polylysine, protamine and lysozyme have very weak antibacterial spectra, and thus while exhibiting strong antibacterial activity against specific bacteria they are not effective against most microbes responsible for degeneration of foods, and therefore cannot be considered as satisfactory preserving agents.

Previously, water soluble hemicellulose has been proposed for use as an anti-oxidant coating on food (JP 04-325058A); in a method of processing fish (JP 58-134968A); or as a food additive where it can be used as a dispersant, a protein stabiliser, a modifier, and/or a foaming agent for food (European Patent No 0,521,707); and also water-soluble hemicelluloses have been identified which can be incorporated into beverages (JP 5-17503). However, water-soluble hemicellulose has never been proposed for use as an antibacterial preserving agent.

### Disclosure of the Invention

As a result of diligent research in the light of these circumstances, the present inventors have found that water-soluble hemicellulose, and especially bean-derived water-soluble hemicellulose, exhibits antibacterial activity and can be effectively employed as an antibacterial preserving agent for foods and drinks. In particular, water-soluble hemicellulose is effective for foods with water activity (AW) of 0.8 or greater, for example foods such as kneaded marine products (AW = 0.8 or greater), raw noodles (AW = 0.85) and vegetable salad (AW =0.9 or greater).

When water-soluble hemicellulose is used as a preserving agent for foods and drinks, adequate antibacterial activity should preferably be achieved with only a small amount, and further diligent research by the present inventors has resulted in the finding that using the water-soluble hemicellulose as a preserving agent in combination with one or more ingredients selected from ethanol, glycine, glucono-deltalactone, sorbic acid, peroxybenzoic acid, dehydroacetic acid and hypochlorous acid and their salts, organic acids such as acetic acid, fumaric acid, propionic acid, adipic acid and their salts, lower fatty acid esters, sugar esters, polylysine, protamine, lysozyme, mustard extract, horseradish extract, bleached flour, phytic acid, and chitosan results in notably enhanced antibacterial activity. The present invention has been completed based on these findings.

The present invention provides the use of water-soluble hemicellulose as an antibacterial preserving agent,and the use as a preserving agent of a composition containing (A) water-soluble hemicellulose and (B) one or more ingredients selected from ethanol, glycine, glucono-deltalactone sorbic acid, peroxybenzoic acid, benzoic acid, dehydroacetic acid and hypochlorous acid and their salts, organic acids such as acetic acid, fumaric acid propionic acid, adipic acid and their salts, lower fatty acid esters, sugar esters, polylysine, protamine, lysozyme, mustard extract, horseradish extract, bleached flour, chitosan and phytic acid, as well as a preserving method comprising the combined use of (A) water-soluble hemicellulose and (B) one or more selecte from the group consisting of ethanol, glycine glucono-deltalactone, sorbic acid, peroxybenzoic acid, benzoic acid, dehydroacetic acid and hypochlorous acid and their salts, organic acids such as acetic acid, fumaric acid, propionic acid, adipic acid and their salts, lower fatty acid esters, sugar esters, polylysine, protamine, lysozyme, mustard extract, horseradish extract, bleached flour, chitosan and phytic acid as a preserving agent.

The water-soluble hemicellulose used according to the present invention is preferably derived from beans, especially soybeans, and particularly from the cotyledon. Also, a lower protein content of the soybean hemicellulose is preferred, and specifically it is : preferred to be no greater than 5%.

The water-soluble hemicellulose can be of any molecular weight, but a high molecular substance is preferred, especially one with an average molecular weight of a few thousand to a few million, and specifically 5000 to one million. If the molecular weight is too large the viscosity will increase, thus lowering the handleability. The average molecular weight of the water-soluble hemicellulose is the value determined by the limiting viscosity method wherein the viscosity of a 0.1 M NaNO₃ solution is measured using standard pullulan (product of Showa Denko, KK.) as the standard substance. Measurement of uronic acid was carried out by the Blumenkrantz method and measurement of neutral sugars was carried out by the GLC method after alditol acetation.

The water-soluble hemicellulose is either obtained by water extraction from the hemicellulose-containing starting material or, if necessary, by heat elution under acid or alkali conditions, or it may be eluted by decomposition with an enzyme. The following is an example of a method for producing water-soluble hemicellulose.

Suitable starting materials to be from plants include the husks of oily seeds of soybean, palm, coconut, corn or cottonseed with the oil and protein removed, and lees from grains such as rice or wheat with the starch and other parts removed. If the starting material is soybeans, then okara (bean-curd refuse) which is a by-product from preparation of tofu (bean curd) and soybean milk or separated soybean protein may also be utilized.

These starting materials may be subjected to heat decomposition at a temperature preferably of from 80°C to 130°C, and more preferably from 100°C to 130°C, under either acidic or alkali conditions but preferably at a pH near the isoelectric point of each protein, and after fractionation of the water-soluble fraction, it may be dried directly or subjected to activated carbon treatment, resin adsorption treatment or ethanol precipitation to remove the hydrophobic substances or low molecular substances, and then dried to yield the water-soluble hemicellulose. Decomposition extraction may also be carried out with hemicellulase or pectinase.

Water-soluble hemicellulose is a polysaccharide containing galactose, arabinose, xylose, fucose, glucose, rhamnose and galacturonic acid as constituent saccharides. A detailed analysis of the constituents of water-soluble hemicellulose as obtained by hydrolysis may be found in Japanese Unexamined Patent Publication No. 4-325058.

Water-soluble hemicelluloses of large molecular weight have viscosities proportional to their molecular weight, and therefore the viscosity may be used as an index for limiting the suitable range of water-soluble hemicellulose which can be utilized as an antibacterial preserving agent for foods and drinks. That is, the water-soluble hemicellulose used as an antibacterial preserving agent according to the invention preferably has a viscosity of 10 mPa·s or greater (measured with a Brookfield rotational viscometer in a 10% aqueous solution at 25°C), more preferably 50 mPa·s or greater, and even more preferably 80 mPa·s or greater, in a 10% aqueous solution at 25°C. The water-soluble hemicellulose can be used so long as its solution viscosity is less than 1000 mPa·s.

The water-soluble hemicellulose may be used alone as an antibacterial preserving agent, or it may be used in combination with one or more known compounds for an improved antibacterial activity. Some appropriate substance groups are discussed below.

Ethanol and glycine may be of any grade suitable for addition to food products. Sorbic acid and benzoic acid salts may be either sodium or potassium salts, although potassium salts are preferred. Organic acids such as acetic acid, fumaric acid and adipic acid or their salts may also be of any grade suitable for addition to food products. Lower fatty acid esters to be used may be glycerin esters of caproic acid, caprylic acid, capric acid or lauric acid. Sugar esters used may be any acceptable as food additives. Protamines used may be protamine sulfate or protamine hydrochloride. Mustard extracts or horseradish extracts used may be fat-soluble components of mustard oils. Chitosan is commercially available for common food use, and may be used either in free form or as an acetic acid salt or glutamic acid salt. Phytic acid used may be a commercially available product for common food use.

The amount of the water-soluble hemicellulose to be added to the food or other product will depend on the combination of its constituents and is not particularly restricted, although the preferred range for use is about 0.05 to 15% by weight.

There are no restrictions on the method of adding the preserving agent in accordance with the invention, and supplementary substances may be added if so desired or not added if so desired. If added, they may be added to the food or drink product together with the water-soluble hemicellulose, or they may be added separately. If the water-soluble hemicellulose is to be used in the form of an aqueous solution, it may be sprayed onto the food or drink product, or the product may be immersed in the aqueous solution.

There are no particular restrictions on the timing for addition of the preserving agent, and the water-soluble hemicellulose may be added to the food or drink product by any method desired. Thus, it may be added during any step of the production process for the food or drink, and for example if it is to be added during the processing step, the food or drink may be immersed in the aqueous solution or the aqueous solution sprayed thereon, after heat molding and prior to wrapping.

There are no particular restrictions on the food products to which the antibacterial preserving agent may be applied, and as examples there may be mentioned grains, fruits, vegetables, seaweed and household dishes or pickled goods containing them as major ingredients, as well as kneaded marine products such as boiled fish paste, chikuwa fish paste, pounded fish cake, fish meat ham and sausage, meat products such as bacon, hamburger and meatballs, soybean milk and tofu, and canned juices and coffee; foods and drinks with water activity (AW) of 0.8 or greater are particularly suitable food products.

Although the mechanism of expression of antibacterial activity by the preserving agent used according to the invention is not fully understood by the present inventors, the improvement in antibacterial activity will be clearly demonstrated by the examples which follow.

The present invention will now be explained in more detail by way of examples. The water-soluble hemicellulose used in the examples was prepared in the following manner.

### Preparation of water-soluble soybean hemicellulose

To raw okara obtained from production of separated soybean protein there was added a 2-fold amount of water, and after adjustment to pH 4.5 with hydrochloric acid, the mixture was heated at 120°C for 1.0 hour and the water-soluble soybean hemicellulose was extracted. After extraction, the mixture was centrifuged (5000 G x 10 min) and the water-soluble fraction containing primarily water-soluble soybean hemicellulose was separated. Sodium hydroxide was added to the aqueous solution containing the water-soluble soybean hemicellulose which was obtained in this manner, and the pH was adjusted to 12. The mixture was then heated at 70°C for 30 minutes. The precipitate resulting from heating was removed, and the solution was neutralized with hydrochloric acid (pH 7). The resulting water-soluble soybean hemicellulose solution was desalted by dialysis, and after treatment with an activated carbon column, it was dried to prepare water-soluble soybean hemicellulose.

The compositional ratio and sugar composition of the resulting water-soluble hemicellulose were as follows.

| Composition ratio of water-soluble soybean hemicellulose (wt%) | |
|---|---|
| Water | 5.4 |
| Crude protein | 9.1 |
| Crude ash content | 6.3 |
| Polysaccharides | 79.0 |
| Average molecular weight | 207,000 |
| Viscosity¹⁾ | 56.8 |

| | |
|---|---|
| 1) Viscosity: cPs, 10% aqueous solution | |

| Sugar composition of water-soluble soybean hemicellulose (wt%) | |
|---|---|
| Galacturonic acid | 17.6 |
| Rhamnose | 2.6 |
| Fucose | 1.9 |
| Arabinose | 20.5 |
| Galactose | 49.9 |
| Xylose | 6.4 |
| Glucose | 1.1 |

### Example 1

The augmented antibacterial activity achieved by combined use of water-soluble hemicellulose and substances which augment its antibacterial activity was investigated. The antibacterial activity was tested using a standard medium (pH 7.2) with water-soluble hemicellulose at 0%, 0.5%, 1.0% or an adequate amount, and containing substances which augment its antibacterial activity, with *Escherichia coil, Aspergillus oryzae*, *Lactobacillus plantarm* or *Saccharomyces cerevisiae* as the bacterial strain. The antibacterial activity was judged by contacting the medium with the bacteria, culturing at 37°C for 4 days and measuring the resulting turbidity. The turbidity of the medium increases as the bacteria proliferate, and therefore if the test substance has antibacterial activity proliferation of the bacteria will be inhibited, thus limiting the increase in turbidity. The turbidity was measured by determining the absorbance value for visible light at a wavelength of 610 nm (using a PTL-396S spectrophotometer, product of Nihon Spectroscopy), and the units for the turbidity were according to the method of JIS1010. Specifically, the turbidity of water containing 1 ppm kaolin was defined as 1 unit. The results were as follows. The water-soluble hemicellulose was confirmed to have strong preserving power.

| • Antibacterial activity against *Escherichia coli* | | | | | |
|---|---|---|---|---|---|
| Test group | | Days preserved | | | |
| | | 1 | 2 | 3 | 4 |
| No addition | | 152 | 526 | | |
| Water-soluble hemicellulose | 0.5% | 19 | 56 | 268 | 468 |
| ditto | 1.0% | 14 | 45 | 119 | 258 |
| Ethanol alone | 0.05% | 125 | 458 | | |
| ditto | 0.1% | 111 | 415 | 492 | |
| Ethanol + | 0.05% | 42 | 248 | 453 | |
| water-soluble hemicellulose (0.5%) | 1.0% | 9 | 107 | 358 | 472 |
| Glycine alone | 0.5% | 127 | 419 | | |
| ditto | 1.0% | 96 | 398 | 487 | |
| Glycine + | 0.5% | 11 | 47 | 229 | 401 |
| water-soluble hemicellulose (0.5%) | 1.0% | 5 | 22 | 97 | 215 |
| Na ascorbate alone | 0.1% | 108 | 381 | | |
| ditto | 0.5% | 12 | 256 | 418 | |
| Na ascorbate + | 0.1% | 14 | 218 | 436 | |
| water-soluble hemicellulose (0.5%) | 0.5% | 0 | 0 | 18 | 75 |
| Glycerin fatty acid ester alone | 0.01% | 124 | 395 | | |
| ditto | 0.05% | 54 | 250 | 481 | |
| Glycerin fatty acid ester + | 0.01% | 5 | 49 | 293 | 412 |
| water-soluble hemicellulose (0.5%) | 0.05% | 0 | 14 | 52 | 239 |
| Common salt alone | 1.0% | 132 | 500 | | |
| ditto | 2.0% | 10 | 375 | | |
| Common salt + | 1.0% | 18 | 48 | 329 | 500 |
| water-soluble hemicellulose (0. 5%) | 2.0% | 8 | 34 | 325 | 500 |
| Horseradish extract alone | 0.1% | 15 | 79 | 176 | 338 |
| ditto | 0.5% | 7 | 18 | 125 | 216 |
| Horseradish extract + | 0.1% | 12 | 28 | 114 | 159 |
| water-soluble hemicellulose (0.5%) | 0.5% | 0 | 0 | 21 | 26 |

| • Antibacterial activity against *Aspergillus oryzae* | | | | | |
|---|---|---|---|---|---|
| Test group | | Days preserved | | | |
| | | 1 | 2 | 3 | 4 |
| No addition | | 289 | 587 | | |
| Water-soluble hemicellulose | 0.5% | 117 | 356 | | |
| ditto | 1.0% | 104 | 245 | 479 | |
| Ethanol alone | 0.05% | 23 | 158 | 398 | |
| ditto | 0.1% | 15 | 115 | 292 | 439 |
| Ethanol + | 0.05% | 12 | 144 | 393 | |
| water-soluble hemicellulose (0.5%) | 1.0% | 9 | 107 | 358 | 472 |
| Glycine alone | 0.5% | 107 | 219 | 428 | |
| ditto | 1.0% | 76 | 178 | 382 | |
| Glycine + | 0.5% | 81 | 127 | 299 | 491 |
| water-soluble hemicellulose (0.5%) | 1.0% | 45 | 132 | 193 | 375 |
| Na ascorbate alone | 0.1% | 121 | 389 | | |
| ditto | 0.5% | 72 | 196 | 478 | |
| Na ascorbate + | 0.1% | 44 | 259 | 498 | |
| water-soluble hemicellulose (0.5%) | 0.5% | 36 | 87 | 298 | 465 |
| Glycerin fatty acid ester alone | 0.01% | 119 | 495 | | |
| ditto | 0.05% | 79 | 275 | 475 | |
| Glycerin fatty acid ester + | 0.01% | 86 | 247 | 453 | |
| water-soluble hemicellulose (0.5%) | 0.05% | 42 | 184 | 352 | |
| Common salt alone | 1.0% | 82 | 418 | | |
| ditto | 2.0% | 62 | 245 | 485 | |
| Common salt + | 1.0% | 54 | 198 | 351 | 500 |
| water-soluble hemicellulose (0.5%) | 2.0% | 32 | 114 | 305 | 500 |
| Horseradish extract alone | 0.1% | 32 | 89 | 224 | 379 |
| ditto | 0.5% | 9 | 27 | 195 | 289 |
| Horseradish extract + | 0.1% | 28 | 68 | 107 | 298 |
| water-soluble hemicellulose (0.5%) | 0.5% | 0 | 29 | 89 | 127 |

| • Antibacterial activity against *Lactobacillus plantarm* | | | | | |
|---|---|---|---|---|---|
| Test group | | Days preserved | | | |
| | | 1 | 2 | 3 | 4 |
| No addition | | 120 | 226 | 418 | |
| Water-soluble hemicellulose | 0.5% | 41 | 159 | 379 | 487 |
| ditto | 1.0% | 24 | 95 | 178 | 352 |
| Ethanol alone | 0.05% | 41 | 254 | 482 | |
| ditto | 0.1% | 11 | 185 | 372 | |
| Ethanol + | 0.05% | 40 | 215 | 311 | |
| water-soluble hemicellulose (0.5%) | 1.0% | 11 | 126 | 343 | 461 |
| Glycine alone | 0.5% | 113 | 329 | | |
| ditto | 1.0% | 71 | 197 | 314 | |
| Glycine + | 0.5% | 25 | 105 | 236 | 417 |
| water-soluble hemicellulose (0.5%) | 1.0% | 46 | 88 | 141 | 274 |
| Na ascorbate alone | 0.1% | 108 | 211 | 362 | |
| ditto | 0.5% | 57 | 129 | 312 | |
| Na ascorbate + | 0.1% | 44 | 119 | 213 | 325 |
| water-soluble hemicellulose (0.5%) | 0.5% | 12 | 23 | 78 | 113 |
| Glycerin fatty acid ester alone | 0.01% | 73 | 291 | | |
| ditto | 0.05% | 49 | 237 | 391 | |
| Glycerin fatty acid ester + | 0.01% | 5 | 53 | 141 | 315 |
| water-soluble hemicellulose (0.5%) | 0.05% | 0 | 29 | 68 | 227 |
| Common salt alone | 1.0% | 97 | 398 | | |
| ditto | 2.0% | 24 | 344 | | |
| Common salt + | 1.0% | 18 | 68 | 122 | 370 |
| water-soluble hemicellulose (0.5%) | 2.0% | 11 | 34 | 97 | 289 |
| Horseradish extract alone | 0.1% | 10 | 41 | 143 | 317 |
| ditto | 0.5% | 7 | 17 | 103 | 205 |
| Horseradish extract + | 0.1% | 9 | 18 | 111 | 201 |
| water-soluble hemicellulose (0.5%) | 0.5% | 0 | 0 | 24 | 36 |

| • Antibacterial activity against *Saccharomyces cerevisiae* | | | | | |
|---|---|---|---|---|---|
| Test group | | Days preserved | | | |
| | | 1 | 2 | 3 | 4 |
| No addition | | 259 | 512 | | |
| Water-soluble hemicellulose | 0.5% | 29 | 66 | 107 | 212 |
| ditto | 1.0% | 17 | 29 | 96 | 147 |
| Ethanol alone | 0.05% | 151 | 458 | | |
| ditto | 0.1% | 93 | 205 | 418 | |
| Ethanol + | 0.05% | 23 | 42 | 95 | 141 |
| water-soluble hemicellulose (0.5%) | 1.0% | 0 | 13 | 27 | 119 |
| Glycine alone | 0.5% | 89 | 213 | 388 | |
| ditto | 1.0% | 58 | 168 | 301 | 458 |
| Glycine + | 0.5% | 10 | 46 | 97 | 196 |
| water-soluble hemicellulose (0.5%) | 1.0% | 4 | 13 | 54 | 107 |
| Na ascorbate alone | 0.1% | 117 | 386 | | |
| ditto | 0.5% | 48 | 196 | 401 | |
| Na ascorbate + | 0.1% | 12 | 117 | 296 | |
| water-soluble hemicellulose (0.5%) | 0.5% | 0 | 0 | 20 | 95 |
| Glycerin fatty acid ester alone | 0.01% | 102 | 377 | | |
| ditto | 0.05% | 49 | 129 | 391 | |
| Glycerin fatty acid ester + | 0.01% | 5 | 19 | 116 | 208 |
| water-soluble hemicellulose (0.5%) | 0.05% | 0 | 11 | 48 | 171 |
| Common salt alone | 1.0% | 104 | 396 | | |
| ditto | 2.0% | 18 | 359 | | |
| Common salt + | 1.0% | 17 | 46 | 119 | 192 |
| water-soluble hemicellulose (0.5%) | 2.0% | 7 | 28 | 66 | 105 |
| Horseradish extract alone | 0.1% | 10 | 58 | 112 | 154 |
| ditto | 0.5% | 5 | 13 | 75 | 111 |
| Horseradish extract + | 0.1% | 0 | 9 | 18 | 58 |
| water-soluble hemicellulose (0.5%) | 0.5% | 0 | 0 | 11 | 27 |

As the above results show, water-soluble hemicellulose not only naturally exhibited a more excellent preserving effect than no addition, but also compared to substances heretofore known to have antibacterial activity, while the combined use of these antibacterial substances with water-soluble hemicellulose provided still greater preserving effects.

### Example 2

Each of the preservatives listed below was added to a basic composition prepared by adding 50 g of common salt, 150 g of starch, 15 g of sodium glutamate, 20 g of sugar and 1.5 kg of ice water to 3 kg of frozen ground white fish meat (The respective proportions of each component added with respect to the basic composition are also listed below, in terms of weight percentages.), and after filling 100 g of each composition into a vinylidene chloride film and heating for 30 minutes in hot water at 90°C, it was cooled in running water for 40 minutes to make boiled fish paste rolls. Each test group consisting of 10 fish paste rolls was stored in an incubator at 30°C, and the keeping quality was visually observed to determine the preserving property. The results are listed below.

| Preservative¹ | A | B | C | D | E | F | G | H |
|---|---|---|---|---|---|---|---|---|
| No addition | | | | | | | | |
| 1 (control group) | | 0.5 | | | | | | |
| 2 (control group) | | | 0.5 | | | | | |
| 3 (control group) | | | | 0.5 | | | | |
| 4 (control group) | | | | | 0.05 | | | |
| 5 (control group) | | | | | | 0.05 | | |
| 6 (control group) | | | | | | | 0.05 | |
| 7 (control group) | | | | | | | | 0.5 |
| 8 (example group) | 0.5 | | | | | | | |
| 9 (example group) | 0.5 | 0.5 | | | | | | |
| 10 (example group) | 0.5 | | 0.5 | | | | | |
| 11 (example group) | 0.5 | | | 0.5 | | | | |
| 12 (example group) | 0.5 | | | | 0.05 | | | |
| 13 (example group) | 0.5 | | | | | 0.05 | | |
| 14 (example group) | 0.5 | | | | | | 0.05 | |
| 15 (example group) | 0.5 | | | | | | | 0.5 |

| | | | | | | | | |
|---|---|---|---|---|---|---|---|---|
| Note 1: A = water-soluble hemicellulose B = ethanol C = glycine D = sodium ascorbate E = glycerin fatty acid ester F = polylysine G = lysozyme H = horseradish extract | | | | | | | | |

| Preservation results | | | | | | | | |
|---|---|---|---|---|---|---|---|---|
| Preservative¹ | Days preserved | | | | | | | |
| | 1 | 2 | 3 | 4 | 5 | 6 | 7 | 8 |
| No addition | 2/10 | 10/10 | | | | | | |
| 1 (control group) | 1/10 | 4/10 | 10/10 | | | | | |
| 2 (control group) | 0/10 | 3/10 | 8/10 | 10/10 | | | | |
| 3 (control group) | 1/10 | 4/10 | 7/10 | 10/10 | | | | |
| 4 (control group) | 0/10 | 3/10 | 8/10 | 10/10 | | | | |
| 5 (control group) | 0/10 | 3/10 | 6/10 | 8/10 | 10/10 | | | |
| 6 (control group) | 0/10 | 4/10 | 7/10 | 9/10 | 10/10 | | | |
| 7 (control group) | 0/10 | 0/10 | 1/10 | 2/10 | 5/10 | 6/10 | 10/10 | |
| 8 (example group) | 0/10 | 0/10 | 0/10 | 2/10 | 5/10 | 7/10 | 10/10 | |
| 9 (example group) | 0/10 | 0/10 | 1/10 | 3/10 | 6/10 | 9/10 | 10/10 | |
| 10 (example group) | 0/10 | 0/10 | 0/10 | 2/10 | 4/10 | 7/10 | 10/10 | |
| 11 (example group) | 0/10 | 0/10 | 0/10 | 1/10 | 3/10 | 9/10 | 10/10 | |
| 12 (example group) | 0/10 | 0/10 | 0/10 | 2/10 | 5/10 | 8/10 | 9/10 | 10/10 |
| 13 (example group) | 0/10 | 0/10 | 0/10 | 1/10 | 3/10 | 7/10 | 10/10 | |
| 14 (example group) | 0/10 | 0/10 | 0/10 | 3/10 | 5/10 | 8/10 | 10/10 | |
| 15 (example group) | 0/10 | 0/10 | 0/10 | 0/10 | 2/10 | 4/10 | 7/10 | 10/10 |

As the above results clearly show, the example groups which contained preserving agents used according to the invention exhibited high keeping quality. Incidentally, no adverse effects on quality were observed by addition of the preserving agents used according to the invention.

### Example 3

A mixture of 500 g of wheat flour, 10 g of common salt and 200 ml of water was worked into a long dough using a roller, and raw noodles were prepared by the conventional method. After further subjecting it to the processing step described below, samples were placed in sterilized petri dishes and covered, and then subjected to a preservation test under conditions of 35°C temperature, 85% relative humidity.
(A) control group (no addition)
(B) Addition of 1.0% water-soluble hemicellulose during dough mixing
(C) Addition of 0.5% water-soluble hemicellulose during dough mixing, with shaping and boiling followed by immersion for 10 seconds in 1.0% aqueous solution of water-soluble hemicellulose and draining.
(D) Preparation of boiled noodles followed by immersion for 10 seconds in 1.0% aqueous solution of water-soluble hemicellulose and draining.

The results of the preservation test were as follows.

| Test group | Storage time | | | | | | |
|---|---|---|---|---|---|---|---|
| | 10 | 20 | 30 | 42 | 66 | 80 | 100 |
| A (control) | - | - | + | ++ | | | |
| B (example) | - | - | - | - | + | ++ | |
| C (example) | - | - | - | - | - | + | ++ |
| D (example) | - | - | - | + | ++ | | |
| Symbols -: no change +: microbe appearance, partial softening ++: microbe appearance, partial dissolution | | | | | | | |

These results clearly demonstrate the superiority of example groups (B), (C) and (D) according to the invention.

### Example 4

Potato salad was prepared with the composition listed below. Samples were prepared with addition of 0.5% water-soluble hemicellulose with and without 0.3% sodium acetate, and two control groups, one with no addition and one with addition of only 0.3% sodium acetate. The test samples were stored at 20°C and the keeping quality of each compared. The results were as shown below.

| Potato salad composition (parts by weight) | |
|---|---|
| mashed potato | 55 |
| mayonnaise | 15 |
| carrot | 15 |
| cucumber | 10 |
| salt | 1 |
| pepper | 0.5 |

### Processing method

(A) no addition
(B) addition of 0.5% sodium acetate
(C) addition of 0.5% water-soluble hemicellulose
(D) addition of 0.5% water-soluble hemicellulose and 0.3% sodium acetate

| Preservation results | | | | | |
|---|---|---|---|---|---|
| Test group | Days preserved | | | | |
| | 1 | 2 | 3 | 4 | 5 |
| A (control) | - | + | ++ | | |
| B (control) | - | - | + | ++ | |
| C (example) | - | - | - | + | ++ |
| D (example) | - | - | - | + | ++ |
| Symbols -: no change +: microbe appearance, partial softening ++: microbe appearance, partial dissolution | | | | | |

These results clearly demonstrate the superiority of the example groups of the invention.

### Industrial Applicability

As shown above, preserving agents proposed according to the invention when used in food and drink products exhibit sufficient preserving effects even when added in small amounts, and with boiled fish paste for example, extended storage of the fish paste was possible of up to 5 times longer without impairing the taste or texture or contributing an undesirable flavor, compared to cases using no antibacterial preserving agent according to the invention. Also, for the storage of boiled noodles, immersion of the boiled . noodles in a 1.0% aqueous solution of a preserving agent of the invention inhibited proliferation of microbes, while a preserving effect was also found with 1.0% addition during preparation of raw noodles. Thus, since an adequate preserving effect can be obtained by addition of the preserving agents to raw materials for foods and drinks during their preparation, the preserving agents are also superior in terms of handleability. Furthermore, the preserving agents used according to the invention can be used in combination with other substances such as ethanol, glycine, lysine and glycerin fatty acid esters for an enhanced preserving effect, and can be used as natural preservatives for cosmetics and pharmaceuticals in addition to food products.

## Claims

1. The use of a composition containing water-soluble hemicellulose as an antibacterial preserving agent.

2. The use according to claim 1, wherein the water-soluble hemicellulose is derived from soybeans.

3. The use as a preserving agent of a composition containing (A) water-soluble hemicellulose and (B) one or more ingredients selected from ethanol, glycine, glucono-deltalactone, sorbic acid, peroxybenzoic acid, benzoic acid, dehydroacetic acid, hypochlorous acid and their salts, organic acids such as acetic acid, fumaric acid, adipic acid, propionic acid and their salts, lower fatty acid esters, sugar esters, polylysine, protamine, lysozyme, mustard extract, horseradish extract, bleached flour, chitosan and phytic acid.

4. The use according to any of claims 1 to 3, wherein the composition is added to a food or drink product during any step of its production process.

5. The use according to any of claims 1 to 4, wherein the composition is used for a food and drink with a water activity of 0.8 or greater.

6. The use according to any of claims 1 to 5, wherein the water-soluble hemicellulose has a viscosity of 80 mPa.s or greater but less than 1000 mPa.s (measured with a Brookfield rotational viscometer in a 10% aqueous solution at 25°C).

7. A preserving method comprising the combined use of (A) water-soluble hemicellulose and (B) one or more ingredients selected from ethanol, glycine, glucono-deltalactone, sorbic acid, peroxybenzoic acid, benzoic acid, dehydroacetic acid, hypochlorous acid and their salts, organic acids such as acetic acid, fumaric acid, adipic acid, propionic acid and their salts, lower fatty acid esters, sugar esters, polylysine, protamine, lysozyme, mustard extract, horseradish extract, bleached flour, chitosan and phytic acid as a preserving agent.

8. A method according to claim 7, wherein the ingredients (A) and (B) are added to a food or drink product having a water activity of 0.8 or greater.

## Patentansprüche

1. Verwendung einer Zusammensetzung, die wasserlösliche Hemicellulose enthält, als ein antibakterielles Konservierungsmittel.

2. Verwendung nach Anspruch 1, bei der die wasserlösliche Hemicellulose von Sojabohnen stammt.

3. Verwendung als ein Konservierungsmittel einer Zusammensetzung, die (A) wasserlösliche Hemicellulose und (B) einen oder mehrere Inhaltsstoffe enthält, die ausgewählt sind unter Ethanol, Glycin, Glucono-δ-lacton, Sorbinsäure, Peroxybenzoesäure, Benzoesäure, Dehydroessigsäure, Hypochlorsäure und deren Salzen, organischen Säuren, wie Essigsäure, Fumarsäure, Adipinsäure, Propionsäure und deren Salzen, Estern niederer Fettsäuren, Zuckerestern, Polylysin, Protamin, Lysozym, Senfextrakt, Meerrettichextrakt, gebleichtem Mehl, Chitosan und Phytinsäure.

4. Verwendung nach einem der Ansprüche 1 bis 3, bei der die Zusammensetzung zu einem Nahrungsmittel- oder Getränkeprodukt während irgendeines Schrittes seines Herstellungsverfahrens zugegeben wird.

5. Verwendung nach einem der Ansprüche 1 bis 4, bei der die Zusammensetzung für ein Nahrungsmittel und ein Getränk mit einer Wasseraktivität von 0,8 oder größer verwendet wird.

6. Verwendung nach einem der Ansprüche 1 bis 5, bei der die wasserlösliche Hemicellulose eine Viskosität von 80 mPa·s oder größer, aber kleiner als 1000 mPa·s (gemessen mit einem Brookfield-Rotationsviskosimeter in einer 10%igen wässrigen Lösung bei 25° C) hat.

7. Konservierungsverfahren aufweisend die kombinierte Verwendung von (A) wasserlöslicher Hemicellulose und (B) einem oder mehreren Inhaltsstoffen, die ausgewählt sind unter Ethanol, Glycin, Glucono-δ-lacton, Sorbinsäure, Peroxybenzoesäure, Benzoesäure, Dehydroessigsäure, Hypochlorsäure und deren Salzen, organischen Säuren, wie Essigsäure, Fumarsäure, Adipinsäure, Propionsäure und deren Salzen, Estern niederer Fettsäuren, Zuckerestern, Polylysin, Protamin, Lysozym, Senfextrakt, Meerrettichextrakt, gebleichtem Mehl, Chitosan und Phytinsäure, als Konservierungsmittel.

8. Verfahren nach Anspruch 7, bei dem die Inhaltsstoffe (A) und (B) zu einem Nahrungsmittel- oder Getränkeprodukt mit einer Wasseraktivität von 0,8 oder größer zugegeben werden.

## Revendications

1. Utilisation d'une composition contenant une hémicellulose hydrosoluble comme agent conservateur antibactérien.

2. Utilisation selon la revendication 1, dans laquelle l'hémicellulose hydrosoluble provient de soja.

3. Utilisation comme agent conservateur d'une composition contenant (A) une hémicellulose hydrosoluble et (B) un ou plusieurs ingrédients choisis parmi l'éthanol, la glycine, la glucono-deltalactone, l'acide sorbique, l'acide peroxybenzoïque, l'acide benzoïque, l'acide déshydroacétique, l'acide hypochloreux et leurs sels, des acides organiques tels que l'acide acétique, l'acide fumarique, l'acide adipique, l'acide propionique et leurs sels, des esters d'acides gras inférieurs, des esters de sucres, la polylysine, la protamine, le lysozyme, l'extrait de moutarde, l'extrait de raifort, ' la farine blanchie, le chitosane et l'acide phytique.

4. Utilisation selon l'une quelconque des revendications 1 à 3, dans laquelle la composition est ajoutée à un produit alimentaire ou un produit à boire pendant n'importe quelle étape de son procédé de production.

5. Utilisation selon l'une quelconque des revendications 1 à 4, dans laquelle la composition est utilisée pour un aliment et une boisson avec une activité de l'eau de 0,8 ou plus.

6. Utilisation selon l'une quelconque des revendications 1 à 5, dans laquelle l'hémicellulose hydrosoluble a une viscosité de 80 mPa.s ou plus mais inférieure à 1000 mPa.s (mesurée avec un viscosimètre rotatif Brookfield dans une solution aqueuse à 10 % à 25°C).

7. Procédé de conservation comprenant l'utilisation combinée de (A) une hémicellulose hydrosoluble et de (B) un ou plusieurs ingrédients choisis parmi l'éthanol, la glycine, la gluconodeltalactone, l'acide sorbique, l'acide peroxybenzoïque, l'acide benzoïque, l'acide déshydroacétique, l'acide hypochloreux et leurs sels, des acides organiques tels que l'acide acétique, l'acide fumarique, l'acide adipique, l'acide propionique et leurs sels, des esters d'acides gras inférieurs, des esters de sucres, la polylysine, la protamine, le lysozyme, l'extrait de moutarde, l'extrait de raifort, la farine blanchie, le chitosane et l'acide phytique en tant qu'agent conservateur.

8. Procédé selon la revendication 7, dans lequel les ingrédients (A) et (B) sont ajoutés à un produit alimentaire ou un produit à boire ayant une activité de l'eau de 0,8 ou plus.
